(19) Europäisches Patentamt
European Patent Office
Office européen des brevets

(11) Veröffentlichungsnummer : **0 035 139**
**B1**

(12) # EUROPÄISCHE PATENTSCHRIFT

(45) Veröffentlichungstag der Patentschrift : **01.06.83**

(21) Anmeldenummer : **81100949.7**

(22) Anmeldetag : **11.02.81**

(51) Int. Cl.³ : **C 09 B 57/04**, C 08 K 5/34, C 09 D 11/02, C 09 D 3/00// C07D403/04

(54) **Isoindolinfarbstoffe und deren Verwendung.**

(30) Priorität : **27.02.80 DE 3007299**

(43) Veröffentlichungstag der Anmeldung : **09.09.81 Patentblatt 81/36**

(45) Bekanntmachung des Hinweises auf die Patenterteilung : **01.06.83 Patentblatt 83/22**

(84) Benannte Vertragsstaaten : **CH DE FR GB IT LI**

(56) Entgegenhaltungen :
**FR A 1 537 299**
**FR A 2 135 529**
**FR A 2 412 589**

**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Lotsch, Wolfgang, Dr.**
**Stettiner Strasse 32**
**D-6711 Beindersheim (DE)**
Erfinder : **Kemper, Reinhard, Dr.**
**Viernheimer Weg 41**
**D-6900 Heidelberg (DE)**
Erfinder : **Schefczik, Ernst, Dr.**
**Dubliner Strasse 7**
**D-6700 Ludwigshafen (DE)**

**EP 0 035 139 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Isoindolinfarbstoffe und deren Verwendung

Die Erfindung betrifft neue Isoindolinfarbstoffe und deren Verwendung.

Die neuen Isoindolinfarbstoffe haben die allgemeine Formel

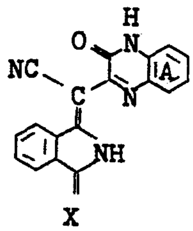

(I)

in der X ein Rest der Formel

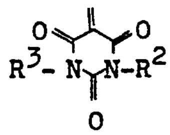 oder 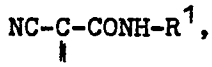

$R^1$ Wasserstoff, $C_1$- bis $C_4$-Alkyl, Benzyl, Phenyl, 1-Naphthyl oder einen 5- oder 6gliedrigen ungesättigten, gegebenenfalls mit einem Benzring kondensierten, heterocyclischen Rest und

$R^2$ und $R^3$ unabhängig voneinander Wasserstoff, $C_1$- bis $C_4$-Alkyl, Benzyl, Phenyl oder 1-Naphthyl bedeuten und wobei der Ring A, die Phenylreste, die Naphthylreste und die heterocyclischen Reste in $R^1$, $R^2$ und $R^3$ gegebenenfalls durch nicht löslich machende Gruppen substituiert sind.

Die Farbstoffe der Formel (I) geben in Lacken, Druckfarben und Kunststoffen Färbungen in stark blaustichig roten Farbtönen, wenn $R^1$ Wasserstoff oder Alkyl ist, Färbungen in orange Tönen. Die Färbungen weisen gute Licht- und Migrationsechtheiten auf.

Für $R^1$, $R^2$ und $R^3$ kommen außer den bereits bestimmt genannten als $C_1$- bis $C_4$-Alkyl z. B. n-Butyl, Isobutyl, sec. Butyl, n-Propyl, Isopropyl, Äthyl und Methyl in Betracht.

Für $R^1$ kommen außerdem als 5- oder 6gliedrige ungesättigte, gegebenenfalls mit einem Benzring kondensierte Heterocyclen z. B. in Betracht : Thiazolyl-(2), Benzthiazolyl-(2), 6-Methoxybenzthiazolyl-(2) oder 1,2,4-Triazolyl-(3).

Die Phenylreste, die Naphthylreste und die Benzreste können durch nicht löslich machende Gruppen substituiert sein.

Unter nicht löslich machenden Gruppen (Substituenten) werden solche verstanden, die weder in Wasser noch in organischen Lösungsmitteln Löslichkeit des Farbstoffs bewirken. Solche Substituenten sind beispielsweise Halogen, Alkyl oder Alkoxy mit je 1 bis 6 C-Atomen, Nitro, Trifluormethyl, Carbamoyl, Ureido, Sulfamoyl oder Cyan ; Alkoxycarbonyl, Alkanoyl, N-Alkylcarbamoyl, N-Alkylureido oder Alkanoylamino mit insgesamt je 2 bis 6 C-Atomen ; Aryloxycarbonyl, Aroyl, Aroylamino, Arylsulfonyl, N-Arylcarbamoyl, N-Arylsulfamoyl, Aryl, N-Arylureido oder Arylazo oder ein ankondensierter 5 oder 6gliedriger Heteroring, der im Ring eine 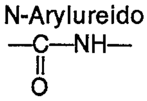 Gruppierung enthält.

Als nicht löslich machende Gruppen sind Chlor, Brom, Methyl, Äthyl, Methoxy und Äthoxy bevorzugt. Die Zahl dieser Gruppen kann bis zu 3, vorzugsweise 0 oder 1 betragen.

Von den Verbindungen der Formel (I) sind aus coloristischen und anwendungstechnischen Gründen solche der Formeln (II) und (III) bevorzugt :

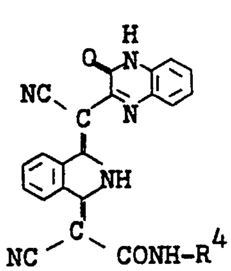

(II)

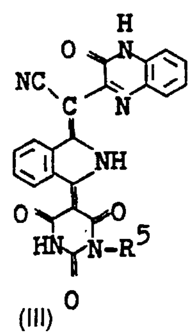

(III)

in denen

$R^4$ gegebenenfalls durch Chlor, Brom, Methyl, Äthyl, Methoxy und/oder Äthoxy substituiertes Phenyl oder 1-Naphthyl und

$R^5$ Wasserstoff, $C_1$- bis $C_4$-Alkyl oder durch Chlor, Brom, Methyl, Äthyl, Methoxy und/oder Äthoxy substituiertes Phenyl bedeuten, wobei die Zahl der Substituenten bis zu 2 betragen kann und diese gleich oder verschieden sein können.

Die Farbstoffe der Formel (III) sind besonders bevorzugt, von denen der Farbstoff mit $R^5$ = Wasserstoff besonders hervorzuheben ist.

Die Farbstoffe der Formel (I) werden nach an sich bekannten Verfahren durch stufenweise Kondensation von 1,3-Diimino-isoindolin mit den entsprechenden CH-aciden Verbindungen erhalten.

Zunächst wird 1,3-Diiminoisoindolin mit einer Verbindung der Formel

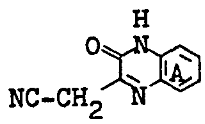

(IV)

im Verhältnis 1 : 1 Mol kondensiert und das Umsetzungsprodukt ( = Halbkondensationsprodukt) der Formel

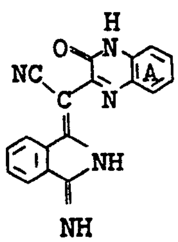

(V)

mit 1 Mol der Verbindung

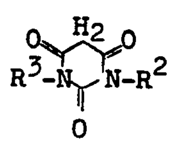

oder $NC-CH_2-CONHR^1$

(VI) (VII)

kondensiert, wobei in den Formeln $R^1$, $R^2$, $R^3$ und A die oben angegebene Bedeutung haben.

Die Kondensation des Diiminoisoindolins mit den Cyanmethylenaktiven Verbindungen der Formel IV erfolgt vorzugsweise in Wasser oder in einem organischen Lösungs- oder Verdünnungsmittel, beispielsweise einem aliphatischen Alkohol mit 1- bis 4 C-Atomen, wie Methanol, Äthanol, Isopropanol, Butanol, ferner Glycolen oder Glycoläthern, offenkettigen oder cyclischen Amiden, wie Dimethylformamid, Dimethylacetamid oder N-Methylpyrrolidon oder in Mischungen der Vorgenannten Lösungsmittel. Ein geringer Überschuß an Diiminoisoindolin kann vorteilhaft sein. Die Menge an Lösungs- und Verdünnungs-mittel ist an sich unkritisch und wird bestimmt durch die Rührbarkeit bzw. Mischbarkeit des Reaktionsansatzes. Die Umsetzung erfolgt in der Regel bei Temperaturen unterhalb von 100 °C.

Die Kondensation der Halbkondensationsprodukte der Formel V mit den CH-aciden Verbindungen der Formel VI und VII erfolgt in den vorstehend genannten Lösungsmitteln, vorzugsweise jedoch in aliphatischen Monocarbonsäuren wie Essigsäure oder Propionsäure bei Temperaturen zwischen 50 und 150 °C.

Sowohl die Halbkondensationsprodukte der Formel V als auch die Pigmente der Formel I fallen in der Hitze aus und können durch Abfiltrieren und gegebenenfalls durch Waschen mit organischen Lösungsmitteln in reiner Form isoliert werden.

Durch geeignete Reaktionsführung gelingt es, auch beide Reaktionsschritte ohne Zwischenisolierung der Halbkondensationsprodukte der Formel V im selben Reaktionsgefäß durchzuführen.

Die erhaltenen Rohprodukte können im allgemeinen als Pigmente verwendet werden. Sie können aber auch nach an sich bekannten Formierungsverfahren in für ihren vorgesehenen Verwendungszweck optimale Pigmentformen überführt werden.

Die folgenden Beispiele sollen die Erfindung zusätzlich erläutern. Die im folgenden angegebenen Teile und Prozentangaben beziehen sich auf das Gewicht.

Beispiel 1

a) 18,5 Teile 2-Cyanmethyl-chinoxalinon und 14,5 Teile 1,3-Diiminoisoindolin werden in 200 Teilen Methanol und 100 Teilen Dimethylformamid 5 Stunden bei Siedetemperatur gerührt. Nach dem Abkühlen wird filtriert, mit Methanol gewaschen und getrocknet. Man erhält 27 Teile des Halbkondensationsproduktes der Formel

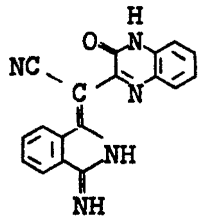

(VIII)

in Form eines grünlich-braunen Pulvers (Schmelzpunkt : > 360 °C).

b) 31 Teile des nach a) erhaltenen Produkts und 13 Teile Barbitursäure werden in 800 Teilen Eisessig 5 Stunden bei Siedetemperatur gerührt. Das Produkt wird warm abfiltriert, mit Eisessig und Methanol gewaschen und getrocknet.

Ausbeute : 34 Teile Farbstoff der Formel (III) mit $R^5$ = H. Der Farbstoff kann direkt zum Pigmentieren von Lacken, Druckfarben und Kunststoffen verwendet werden. Man erhält stark blaustichige rote Färbungen, die sehr gute Licht- und Überlackierechtheiten aufweisen.

c) Erwärmt man 10 Teile des nach b) erhaltenen Farbstoffs 3 Stunden in 140 Teilen Dimethylformamid auf 120 °C, so erhält man nach dem Isolieren 9 Teile des Farbstoffs in einer violetten Pigmentform, die farbstarke Färbungen mit verbesserter Lichtechtheit gibt.

Beispiele 2 bis 11

Es wird wie in Beispiel 1 a) und b) angegeben gearbeitet, verwendet jedoch anstelle von Barbitursäure die der Formel (VI). Man erhält Farbstoffe der Formel

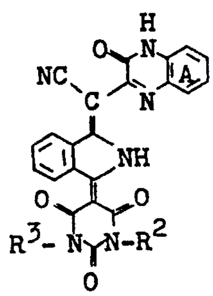

Die Bedeutung von A, $R^2$ und $R^3$ und der Farbton der mit den Pigmenten erhaltenen Färbungen ist in der folgenden Tabelle angegeben.

| Bsp. | Ring A | $R^2$ | $R^3$ | Farbton der Färbung |
|---|---|---|---|---|
| 2 | unsubst. | $-CH_3$ | -H | rot |
| 3 | " | " | $-CH_3$ | " |
| 4 | " | $-C_2H_5$ | -H | " |
| 5 | " | 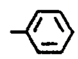 | -H | " |
| 6 | " | " | 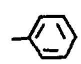 | " |

(Fortsetzung)

| Bsp. | Ring A | $R^2$ | $R^3$ | Farbton der Färbung |
|---|---|---|---|---|
| 7 | " | 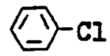 | -H | " |
| 8 | " | 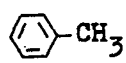 | -H | " |
| 9 | " | 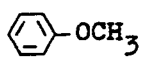 | -H | " |
| 10 | 6/7 $-CH_3$ [1)] | H | -H | " |
| 11 | 6/7-$OCH_3$ [1)] | H | -H | " |

1) Gemisch aus der in 6- und in 7-Stellung substituierten Verbindung.

Beispiel 12

b) 31 Teile des nach Beispiel 1a) hergestellten Halbkondensationsproduktes (VII) und 15 Teile Cyanacetanilid werden in 600 Teilen Eisessig 5 Stunden auf Siedetemperatur erwärmt. Nach dem Abkühlen wird der Farbstoff isoliert.

Ausbeute : 30 Teile des Farbstoffs der Formel (II) mit $R^4$ = 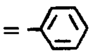.

Das Verfahrensprodukt kann direkt zum Pigmentieren von Lacken, Druckfarben und Kunststoffen verwendet werden. Man erhält farbstarke, stark blaustichig rote Färbungen, die sehr gute Licht- und Überlackierechtheiten aufweisen.

c) 10 Teile des nach b) erhaltenen Produktes werden in 150 Teilen Dimethylformamid 3 Stunden bei 120 °C gerührt. Nach dem Isolieren erhält man 8 Teile des Farbstoffs in einer violetten Pigmentform, deren Färbungen verbesserte Lichtechtheit aufweisen.

Beispiele 13 bis 23

Man arbeitet wie im Beispiel 12b), verwendet jedoch anstelle von Cyanacetanilid solche der Formel VII, dann erhält man Farbstoffe der Formel (II). Die Bedeutung von $R^1$ bzw. $R^4$ sowie der mit den Farbstoffen erhaltene Farbton der Ausfärbung ist in der folgenden Tabelle zusammengestellt.

| Bsp. | $R^1$ ($R^4$) | Farbton der Färbung |
|---|---|---|
| 13 | -H | orange |
| 14 | $-CH_3$ | " |
| 15 | $-C_2H_5$ | " |
| 16 | 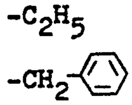 | " |
| 17 | 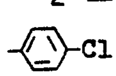 | marron |
| 18 | 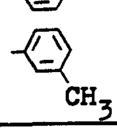 | " |

(Fortsetzung)

| Bsp. | $R^1$ ($R^4$) | Farbton der Färbung |
|---|---|---|
| 19 | 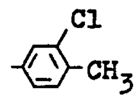 | " |
| 20 | 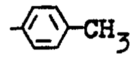 | " |
| 21 | 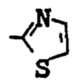 | " |
| 22 | 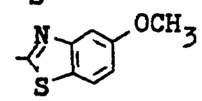 | " |
| 23 | 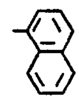 | " |

Beispiel 24 (Anwendung)

a) Lack

10 Teile des nach Beispiel 1 erhaltenen Farbstoffes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden rote Volltonlackierungen mit guter Licht- und Überspritzechtheit erhalten. Durch Zumischen von Titandioxyd werden rote Weißaufhellungen erhalten.

Verwendet man die in den Beispielen 2 bis 23 beschriebenen Farbstoffe, so werden Lackierungen in ähnlichen orange bis roten Farbtönen und ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195 °C). Man erhält rote Extrudate, deren Färbung gute Lichtechtheit aufweist.

Verwendet man Mischungen aus 0,5 Teilen Farbstoff und 1 Teil Titandioxyd, so erhält man deckende, rote Färbungen.

Verwendet man die Pigmentfarbstoffe, die nach den Beispielen 2 bis 23 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine rote Toluol-Tiefdruckfarbe. Die mit dieser Farbe erhaltenen Drucke weisen gute Lichtechtheit auf.

Bei Verwendung der Farbstoffe aus den Beispielen 2 bis 23 werden ähnliche Ergebnisse erhalten.

**Ansprüche**

1. Isoindolinfarbstoffe der allgemeinen Formel

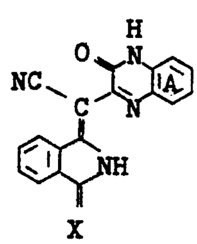

in der X ein Rest der Formel

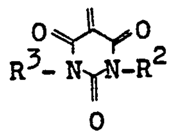

oder

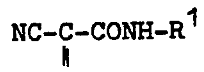

$R^1$ Wasserstoff, $C_1$- bis $C_4$-Alkyl, Benzyl, Phenyl, 1-Naphthyl oder einen 5- oder 6gliedrigen ungesättigten, gegebenenfalls mit einem Benzring kondensierten, heterocyclischen Rest und

$R^2$ und $R^3$ unabhängig voneinander Wasserstoff, $C_1$- bis $C_4$-Alkyl, Benzyl, Phenyl oder 1-Naphthyl bedeuten und wobei der Ring A, die Phenylreste-, die Naphthylreste und die heterocyclischen Reste in $R^1$, $R^2$ und $R^3$ gegebenenfalls durch nicht löslich machende Gruppen substituiert sind.

2. Isoindolinfarbstoffe gemäß Anspruch 1, dadurch gekennzeichnet, daß die Phenylreste, die Naphthylreste und die heterocyclischen Reste in $R^1$, $R^2$ und $R^3$ und der Ring A gegebenenfalls durch Chlor, Brom, Methyl, Äthyl, Methoxy oder Äthoxy substituiert sind, wobei die Zahl der Substituenten bis zu 3 betragen kann und diese gleich oder verschieden sein können.

3. Isoindolinfarbstoffe gemäß Anspruch 1 oder 2 wobei in der Formel X für den Rest der Formel

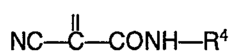

steht, in dem $R^4$ ein gegebenenfalls durch Chlor, Brom, Methyl, Äthyl, Methoxy und/oder Äthoxy substituiertes Phenyl oder 1-Naphthyl bedeutet, wobei die Zahl der Substituenten bis zu 2 betragen kann und diese gleich oder verschieden sein können.

4. Isoindolinfarbstoffe gemäß Anspruch 1, wobei in der Formel X einen Rest der Formel

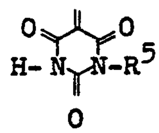

bedeutet, in der $R^5$ für Wasserstoff, $C_1$- bis $C_4$-Alkyl oder gegebenenfalls durch Chlor, Brom, Methyl, Äthyl, Methoxy und/oder Äthoxy ein- oder zweifach substituiertes Phenyl steht.

5. Verwendung der Isoindolinfarbstoffe gemäß den Ansprüchen 1 bis 4 zum Pigmentieren von Lacken, Druckfarben und Kunststoffen.

**Claims**

1. An isoindoline colorant of the general formula

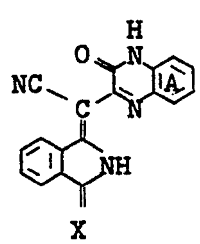

where X is a radical of the formula

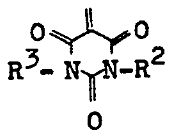

or

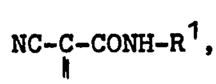

$R^1$ is hydrogen, $C_1$-$C_4$-alkyl, benzyl, phenyl, 1-naphthyl or a 5-membered or 6-membered, unsaturated heterocyclic radical which may or may not be benzo-fused,

$R^2$ und $R^3$, independently of one another, are hydrogen, $C_1$-$C_4$-alkyl, benzyl, phenyl or 1-naphthyl,

and the ring A and the phenyl, naphthyl and heterocyclic radicals in $R^1$, $R^2$ and $R^3$ may or may not be substituted by groups which do not confer solubility.

2. An isoindoline colorant as claimed in claim 1, wherein the phenyl radicals, the naphthyl radicals and the heterocyclic radicals in $R^1$, $R^2$ and $R^3$, and the ring A are unsubstituted or mono-, di- or trisubstituted by chlorine, bromine, methyl, ethyl, methoxy or ethoxy, the substituents being identical or different.

3. An isoindoline colorant as claimed in claim 1 or 2, in whose formula X is a radical of the formula

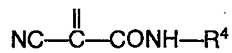

where $R^4$ is phenyl or 1-naphthyl, either of which is unsubstituted or mono- or di-substituted by chlorine, bromine, methyl, ethyl, methoxy and/or ethoxy, the substituents being identical or different.

4. An isoindoline colorant as claimed in claim 1, in whose formula X is a radical of the formula

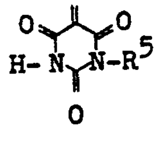

where $R^5$ is hydrogen, $C_1$-$C_4$-alkyl, or phenyl which is unsubstituted or mono- or di-substituted by chlorine, bromine, methyl, ethyl, methoxy and/or ethoxy.

5. The use of an isoindoline colorant as claimed in claims 1 to 4 for pigmenting surface coatings, printing inks and plastics.

**Revendications**

1. Colorant d'isoindolines de formule générale

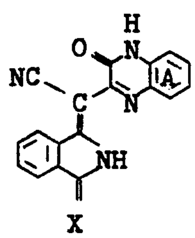

dans laquelle X représente un reste de formule

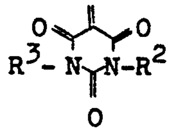

ou

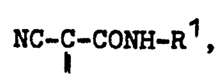

$R^1$ représente l'hydrogène, un groupe alkyle en $C_1$-$C_4$, benzyle, phényle, 1-naphtyle ou un reste hétérocyclique insaturé à 5 ou 6 chaînons éventuellement condensé avec un noyau benzénique, et

$R^2$ et $R^3$ représentent chacun, indépendamment l'un de l'autre, l'hydrogène, un groupe alkyle en $C_1$-$C_4$, benzyle, phényle ou 1-naphtyle, le cycle A, le noyau phényle, le noyau naphtyle et les restes hétérocycliques de $R^1$, $R^2$ et $R^3$ pouvant éventuellement être substitués par des groupes non solubilisants.

2. Colorants d'isoindolines selon la revendication 1, caractérisés en ce que les restes phényle, les restes naphtyle et les restes hétérocycliques de $R^1$, $R^2$ et $R^3$, et le cycle A, sont éventuellement substitués par le chlore, le brome, des groupes méthyle, éthyle, méthoxy, ou éthoxy, le nombre des substituants pouvant aller jusqu'à 3, et les substituants pouvant être identiques ou différents.

3. Colorants d'isoindolines selon la revendication 1 ou 2, dans la formule desquels X représente le reste de formule

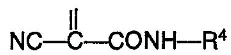

dans laquelle $R^4$ représente un groupe phényle ou 1-naphtyle éventuellement substitué par le chlore, le

brome, des groupes méthyle, éthyle, méthoxy et/ou éthoxy, le nombre des substituants pouvant aller jusqu'à 2 et les substituants pouvant être identiques ou différents.

4. Colorants d'isoindolines selon la revendication 1, dans la formule desquels X représente un reste de formule

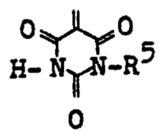

dans laquelle $R^5$ représente l'hydrogène, un groupe alkyle en $C_1$-$C_4$ ou un groupe phényle éventuellement mono- ou di-substitué par le chlore, le brome, des groupes méthyle, éthyle, méthoxy et/ou éthoxy.

5. Utilisation des colorants d'isoindolines selon les revendications 1 à 4 pour la pigmentation de peintures, encres d'impression et résines synthétiques.